Europäisches Patentamt

European Patent Office

Office européen des brevets

(11) Veröffentlichungsnummer: **0 192 221**
**A2**

(12) ## EUROPÄISCHE PATENTANMELDUNG

(21) Anmeldenummer: 86102024.6

(22) Anmeldetag: 18.02.86

(51) Int. Cl.⁴: **B 23 B 39/02**
B 23 Q 1/16, B 23 B 3/06

(30) Priorität: 19.02.85 DE 3505643

(43) Veröffentlichungstag der Anmeldung:
27.08.86 Patentblatt 86/35

(84) Benannte Vertragsstaaten:
DE FR GB IT

(71) Anmelder: Schwäbische Hüttenwerke Gesellschaft mit
beschränkter Haftung
Wilhelmstrasse 67 Postfach 3280
D-7080 Aalen-Wasseralfingen(DE)

(72) Erfinder: von Stelzer, Hans
Keplerstrasse 9
D-7080 Aalen-Unterkochen(DE)

(74) Vertreter: Lorenz, Werner, Dipl.-Ing.
Fasanenstrasse 7
D-7920 Heidenheim(DE)

(54) Fräs- und/oder Bohrmaschine.

(57) Eine Fräs- und/oder Bohrmaschine für die mehrseitige Bearbeitung von Werkstücken ist mit wenigstens einer Arbeitsspindel (5), in der ein Werkzeug (7) in einer Werkzeugaufnahme (6) eingespannt ist, mit einem auf einem Spindelträger (2) verschiebbaren Schlitten (3), auf dem ein Fräskopf (4) mit der Arbeitsspindel (5) angeordnet ist, und mit einem Frästisch (8) zur Aufnahme des zu bearbeitenden Werkstückes (7) versehen. Der Frästisch (8) ist wenigstens teilweise als Drehmaschinentisch (13) mit einer Drehspindel (12) und einer Drehmaschinenantriebseinheit (10,11) ausgebildet. In die Werkzeugaufnahme (6) der Arbeitsspindel (5) sind Drehwerkzeuge (7) einspannbar.

Fig.1

EP 0 192 221 A2

PATENTANWALT

DIPL.-ING. WERNER LORENZ

Fasanenstraße 7
D-7920 Heidenheim
**0192221**

08.02.1985 - hf

Akte: SHW 1337

Anmelder:

=========

Schwäbische Hüttenwerke

GmbH

7080 Aalen-Wasseralfingen

## Fräs- und/oder Bohrmaschine

Die Erfindung betrifft eine Fräs- und/oder Bohrmaschine für die mehrseitige Bearbeitung von Werkstücken mit wenigstens einer Arbeitsspindel, in der ein Werkzeug in einer Werkzeugaufnahme eingespannt ist, mit einen auf einem Spindelträger verschiebbaren Schlitten, auf dem ein Fräskopf mit der Arbeitsspindel angeordnet ist, und mit einem Frästisch zur Aufnahme des zu bearbeitenden Werkstückes.

Auf einer derartigen Fräsmaschine lassen sich bei kurzen Rüstzeiten durch einen automatischen Werkzeugwechsel auf wirtschaftliche Weise Werkstücke bohren und fräsen. Bei Verwendung eines Fräskopfes bzw. Spindelstockes, der um eine um 45° gegen die Horizontale nach oben geneigte Achse

-....-

schwenkbar ist, ist mit nur einer Arbeitsspindel sowohl ein horizontales, als auch ein vertikales Fräsen oder Bohren möglich.

Das zu bearbeitende Werkstück wird auf dem Frästisch festgespannt und kann dann auf mehreren Seiten mit Bohr- und Fräswerkzeugen bearbeitet werden. Statt einer direkten Aufspannung des Werkstückes auf dem Frästisch kann auch eine Befestigung über Paletten erfolgen.

Nachteilig dabei ist jedoch, daß Werkstücke, an denen zusätzlich noch Dreharbeiten auszuführen sind, diese gesondert auf einer Drehmaschine bearbeitet werden müssen. Dies bedeutet, daß hierfür entsprechende Rüst- und Einrichtungszeiten erforderlich sind, die einen erhöhten Aufwand, insbesondere an Personal, erfordern.

Der vorliegenden Erfindung liegt daher die Aufgabe zugrunde eine Fräs- und/oder Bohrmaschine der eingangs erwähnten Art so auszubilden, daß auf ihr auch Dreharbeiten möglich werden.

Erfindungsgemäß wird diese Aufgabe dadurch gelöst, daß der Frästisch wenigstens teilweise als Drehmaschinentisch mit einer Drehspindel und einer Drehmaschinenantriebseinheit ausgebildet ist.

0192221

Durch die erfindungsgemäße Ausgestaltung des Frästisches zu einem Drehmaschinentisch bzw. durch die Anordnung eines Drehmaschinentisches in einem Teil des Frästisches können nun auf ein und derselben Maschine praktisch alle spanabhebenden Arbeiten an einem Werkstück durchgeführt werden. Fräs- und Bohrarbeiten lassen sich nach wie vor im gleichen Umfange durchführen, zusätzlich sind nunmehr jedoch auch Dreharbeiten möglich. Hierzu ist es lediglich erforderlich, daß der zu drehende Abschnitt des Werkstückes entsprechend eingespannt ist, und zur Drehachse der Drehspindel ausgerichtet ist.

Das Drehwerkzeug kann in die normale Werkzeugaufnahme der Arbeitsspindel eingespannt sein. In diesem Falle ist keine gesonderte Einspanneinrichtung erforderlich. Allerdings sollte in diesem Falle die Lagerung der Spindel so ausgebildet sein, daß evtl. Schläge, Stöße oder dgl. aufgrund des unverdrehbar eingespannten Drehwerkzeuges nicht zu einer Beschädigung oder gar Zerstörung der Lagerung führen, insbesondere wenn anschließend beim Bohren oder Fräsen wieder die Arbeitsspindel mit sehr hohen Drehzahlen läuft.

Aus diesem Grunde kann es ggf. von Vorteil sein, wenn für das Drehwerkzeug in dem Fräskopf eine separate Einspanneinrichtung vorhanden ist.

-...-

Von Vorteil ist weiterhin auch, daß mit der erfindungsgemäßen Maschine sowohl zum Fräsen oder Bohren als auch zum
Drehen mit sehr großen Leistungen gearbeitet werden kann.
Mit anderen Worten, sowohl die Einrichtungen zum Fräsen oder
Bohren als auch die Einrichtungen zum Drehen sind als Hauptaggregate ausgebildet und dementsprechend belastbar.

Im allgemeinen sind derartige Fräsmaschinen mit einer Werkzeugwechseleinrichtung und einem Werkzeugmagazin zum automatischen Werkzeugwechsel ausgestattet. In diesem Falle ist
erfindungsgemäß lediglich dafür zu sorgen, daß das Werkzeugmagazin zur Aufnahme von Drehwerkzeugen erweitert ist und
daß die Drehwerkzeuge über die Werkzeugwechseleinrichtung
zur Arbeitsspindel transportierbar sind.

Die Fräs- und Bohrmaschine kann selbst von beliebiger Ausgestaltung sein. Maßgebend ist lediglich, daß der Frästisch
mit einem Drehmaschinentisch versehen ist oder als Drehmaschinentisch ausgebildet ist. In sehr vorteilhafter Weise
läßt sich die Erfindung bei einer Konsolfräsmaschine mit
vertikaler Achse der Drehspindel einsetzen. Die Erfindung
läßt sich jedoch ebenso bei Bettfräsmaschinen verwirklichen.

Damit Fräsarbeiten problemlos an Werkstücken durchgeführt
werden können, welche auf dem Teil des Frästisches angeordnet sind, der als Drehmaschinentisch ausgebildet ist, kann vorgesehen sein, daß die Drehspindel zum Fräsen in verschiedenen Winkelstellungen durch eine Verriegelungseinrichtung arretierbar ist.

Verriegelungseinrichtungen hierfür sind allgemein bekannt, wobei diese in der Regel so ausgebildet sind, daß die Arretierung formschlüssig ist.

Im Bedarfsfalle kann der Drehmaschinentisch auch numerisch gesteuert sein. Auf diese Weise können Fräsarbeiten mit entsprechender Bahn auch während einer kontinuierlichen langsamen Drehung des Drehmaschinentisches ausgeführt werden.

Von Vorteil ist es, wenn der Drehmaschinentisch direkt oder indirekt über den Frästisch höhenverstellbar ist. Gleiches gilt auch für eine Ausgestaltung, bei der der Drehmaschinentisch in horizontaler Richtung verschiebbar ist.

Diese Ausgestaltung erhöht den Arbeitsbereich entsprechend und ermöglicht die problemlose Bearbeitung von beliebigen Werkstückformen und -größen.

Nachfolgend ist ein Ausführungsbeispiel der Erfindung anhand der Zeichnung prinzipmäßig beschrieben.

-...-

Es zeigt:

Fig. 1: eine Seitenansicht der erfindungsgemäßen Fräs-
und Bohrmaschine in Konsolenbauart (nur ausschnittsweise);

Fig. 2: eine Draufsicht auf die Fräs- und Bohrmaschine
nach der Figur 1.

Die Fräs- und Bohrmaschine ist von allgemein bekannter Bauart weshalb nachfolgend nur deren wichtigste Teile kurz beschrieben werden.

Sie weist als wesentlichen Bestandteil einen auf einem
Maschinengestell 1 angeordneten Spindelträger 2 auf, auf dem
ein Schlitten 3 verschiebbar ist. Am vorderen Ende des
Schlittens 3 ist ein nicht näher dargestellter Fräskopf 4 um
eine um 45° gegen die Horizontale nach oben geneigte Achse
schwenkbar befestigt. Der Fräskopf 4 weist eine
Arbeitsspindel 5 mit vertikaler Achse auf, welche von einem
Fräsmotor 26 aus angetrieben wird. In einer nicht näher dargestellten Werkzeugaufnahme 6 ist ein Werkzeug 7 in die Arbeitsspindel 5 eingespannt. In der Werkzeugaufnahme 6 können
nun anstelle der Fräs- oder Bohrwerkzeuge auch Drehwerkzeuge
unverdrehbar eingespannt werden. Stattdessen ist es jedoch
auch möglich hierfür eine gesonderte Einspanneinrichtung (nicht dargestellt) in oder an dem Fräskopf 4 vorzusehen.

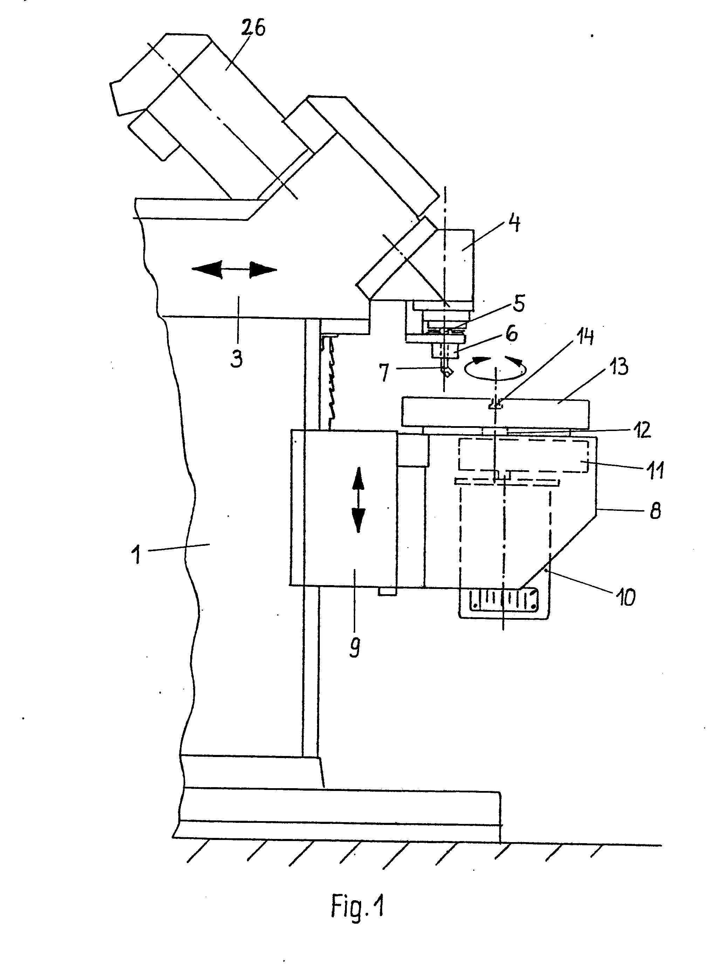

Durch eine entsprechende Verschwenkung des Fräskopfes kann die Arbeitsspindel 5 aus ihrer vertikalen Lage in einer horizontale Lage gebracht werden. Ein in der Darstellung nach der Fig. 1 unter der Arbeitsspindel 5 angeordneter Frästisch 8 ist an einem Kreuzschlitten 9 frei auskragend befestigt. Der Kreuzschlitten 9 ist an einer vertikalen Führung des Maschinengestelles 1 höhenverstellbar, womit auch der Frästisch 8 höhenverstellbar ist. Die Höhenverstellbarkeit kann auf beliebige Weise, z.B. über einen Vorschubmotor und eine Kugelrollenspindel erreicht werden.

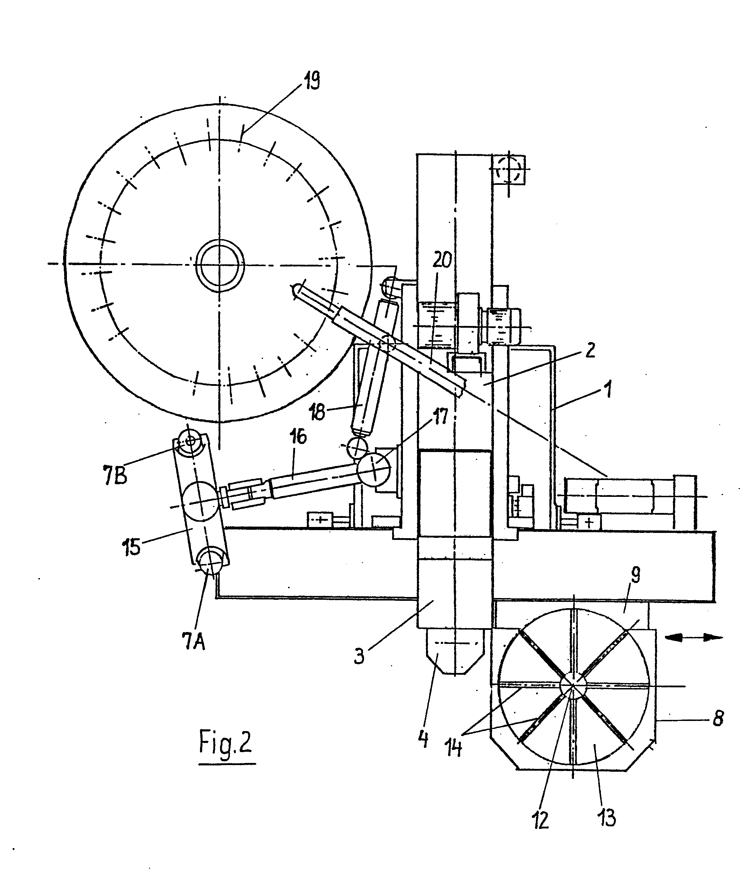

Über einen weiteren nicht dargestellten Motor läßt sich der Frästisch 8 auch in horizontaler Richtung (s. Pfeile der Fig. 2) verschieben.

In dem Frästisch befindet sich nun ein Drehmaschinenmotor 10 mit einem Untersetzungsgetriebe 11 und einer Arbeitsspindel 12. Ein Flansch 13 am vorderen Ende der Arbeitsspindel 12 bildet eine Tischauflage, bzw. einen Drehmaschinentisch 13. Der Drehmaschinentisch 13 ist mit radial verlaufenden T-Nuten 14 versehen. Selbstverständlich können die T-Nuten 14, welche zum Aufspannen von Werkstücken dienen, auch in einer anderen Anordnung und Ausgestaltung verlaufen.

Wie aus der Fig. 2 ersichtlich ist, stellt der Drehmaschinentisch 13 praktisch die gesamte Auflage des Frästisches 8 dar. Im Rahmen der Erfindung ist es jedoch auch möglich, daß der Frästisch größer ausgestaltet ist und im Bedarfsfalle auch mit den T-Nuten 14 zusammenarbeitenden Nuten versehen ist.

Die Drehspindel 12 wird - je nach Anwendungsfall - mit einer Drehzahl von z.B. 800 - 1000 U/min angetrieben. Die Arretierung des Drehmaschinentisches 13 zum Fräsen kann auf beliebige Weise über eine nicht näher dargestellte Verriegelungseinrichtung erfolgen.

Selbstverständlich ist es jedoch auch möglich, daß der Drehmaschinentisch numerisch gesteuert wird. Statt einer Drehzahl von z.B. 800 U/min zum Drehen kann zum Fräsen, insbesondere zum Formfräsen, der Drehmaschinentisch auch mit wesentlich langsamerer Umdrehungszahl, z.B. 6 - 8 U/min angetrieben werden.

Die Werkzeugaufnahme ist nun so ausgestaltet, daß sie auswechselbar auch ein Drehwerkzeug 7 aufnehmen kann.

Aus der Fig. 2 ist in Prinzipdarstellung ersichtlich, daß ein Werkzeugwechsel automatisch erfolgen kann. Hierzu dient ein Doppelgreifer 15, in welchem zwei Werkstücke 7A und 7B gehalten sind. Der Doppelgreifer 15 besitzt einen Schwenkarm 16 mit einer Schwenkachse 17. Ein hydraulischer Schwenkzylinder 18 sorgt für die Verschwenkung des Doppelgreifers 15, damit ein Werkzeug aus einem Werkzeugmagazin 19 geholt und in die Werkzeugaufnahme 6 der Arbeitsspindel 5 eingespannt werden kann. Die Steuerung erfolgt über ein nicht dargestelltes Hängepult, welches über einen Galgen 20 (in der Fig. 2 teilweise dargestellt) mit der Fräs- und Bohrmaschine verbunden ist.

08.02.1985 - hf

Akte: SHW 1337

Anmelder:

=========

Schwäbische Hüttenwerke

GmbH

7080 Aalen-Wasseralfingen


P a t e n t a n s p r ü c h e


1. Fräs- und/oder Bohrmaschine für die mehrseitige Bearbeitung von Werkstücken, mit wenigstens einer Arbeitsspindel (5), in der ein Werkzeug (7) in einer Werkzeugaufnahme (6) eingespannt ist, mit einem auf einem Spindelträger (2) verschiebbaren Schlitten (3), auf dem ein Fräskopf (4) mit der Arbeitsspindel angeordnet ist, und mit einem Frästisch (8) zur Aufnahme des zu bearbeitenden Werkstückes, d a d u r c h  g e k e n n z e i c h n e t , daß der Frästisch (8) wenigstens teilweise als Drehmaschinentisch (13) mit einer Drehspindel (12) und einer Drehmaschinenantriebseinheit (10,11) ausgebildet ist.


2. Fräs- und/oder Bohrmaschine nach Anspruch 1,


- ... -

dadurch gekennzeichnet, daß
in die Werkzeugaufnahme (6) der Arbeitsspindel (5) Drehwerkzeuge (7) einspannbar sind.

3. Fräs- und/oder Bohrmaschine nach Anspruch 1,
dadurch gekennzeichnet, daß
zur Aufnahme von Drehwerkzeugen (7) in oder am Fräskopf (4) eine gesonderte Einspanneinrichtung angeordnet ist.

4. Fräs- und/oder Bohrmaschine nach Anspruch 1, 2 oder 3 mit einer Werkzeugwechseleinrichtung (15-18) und einem Werkzeugmagazin (19),
dadurch gekennzeichnet, daß
das Werkzeugmagazin (19) zur Aufnahme von Drehwerkzeugen (7) erweitert ist und daß die Drehwerkzeuge über die Werkzeugwechseleinrichtung (15-18) zur Arbeitsspindel (5) transportierbar sind.

5. Fräs- und/oder Bohrmaschine nach einem der Ansprüche 1-4,
dadurch gekennzeichnet, daß
die Drehspindel (12) zum Fräsen in verschiedenen Winkelstellungen durch eine Verriegelungseinrichtung arretierbar ist.

6. Fräs- und/oder Bohrmaschine nach Anspruch 5,
dadurch gekennzeichnet, daß
die Arretierung durch die Verriegelungseinrichtung form-

-...-

schlüssig ist.

7. Fräs- und/oder Bohrmaschine nach einem der Ansprüche 1-6,
d a d u r c h   g e k e n n z e i c h n e t , daß
der Drehmaschinentisch (13) als numerisch gesteuerter Rundtisch für die Fräsbearbeitung ausgebildet ist.

8. Fräs- und/oder Bohrmaschine nach einem der Ansprüche 1-7,
d a d u r c h   g e k e n n z e i c h n e t , daß
der Drehmaschinentisch (13) direkt oder indirekt über dem
Frästisch (8) höhenverstellbar ist.

9. Fräs- und/oder Bohrmaschine nach einem der Ansprüche 1-8,
d a d u r c h   g e k e n n z e i c h n e t , daß
der Drehmaschinentisch (13) direkt oder indirekt über dem
Frästisch (8) in horizontaler Richtung verschiebbar ist.

10. Fräs- und/oder Bohrmaschine nach den Ansprüchen 1-9,
d a d u r c h   g e k e n n z e i c h n e t , daß
sie als Konsolfräsmaschine mit vertikaler Achse der Drehspindel (12) ausgebildet ist.

11. Fräs- und/oder Bohrmaschine nach einem der Ansprüche
1-10,
d a d u r c h   g e k e n n z e i c h n e t , daß
sie als Bettfräsmaschine ausgebildet ist.

Fig.1

Fig.2